**Europäisches Patentamt**

**European Patent Office**

**Office européen des brevets**

(19)

(11) Veröffentlichungsnummer: **0 341 528**

**A1**

## (12) EUROPÄISCHE PATENTANMELDUNG

(21) Anmeldenummer: **89107848.7**

(22) Anmeldetag: **29.04.89**

(51) Int. Cl.⁴: **A01D 45/02**

(30) Priorität: **09.05.88 AT 1214/88**

(43) Veröffentlichungstag der Anmeldung:
**15.11.89 Patentblatt 89/46**

(84) Benannte Vertragsstaaten:
**AT BE DE FR IT NL**

(71) Anmelder: **Gebrüder Busatis Gesellschaft m.b.H.**

**A-3251 Purgstall(AT)**

(72) Erfinder: **Magdowski, Hans Otto, Ing.**
**ohne Strasse**
**A-3251 Purgstall(AT)**

(74) Vertreter: **Puchberger, Rolf, Dipl. Ing. et al**
**Patentanwälte, Dipl. Ing. Georg Puchberger**
**Dipl. Ing. Rolf Puchberger Dipl. Ing. Peter**
**Puchberger Singerstrasse 13 Postfach 55**
**A-1010 Wien(AT)**

(54) **Vorrichtung zum Pflücken und/oder Häckseln und/oder Zerkleinern von Pflanzen aller Art.**

(57) Bei Vorrichtungen zum Pflücken und/oder Häckseln und/oder Zerkleinern von Pflanzen aller Art, insbesondere Vorsatz für Erntemaschinen für Mais, Sonnenblumen und dergl. mit einem Rotor, der mit Messern zusammenwirkende Schlitze aufweist, tritt das technische Problem auf, daß Rotoren, die durch Abnutzung nur in einem kleinen Teilbereich unbrauchbar geworden sind, durch vollkommen neue Rotoren ersetzt werden müssen. Dies ist technisch und wirtschaftlich äußerst nachteilig. Zur Lösung werden Rotoren (1) vorgeschlagen, die einzelne Schneidsegmente (2) umfassen, die auswechselbar sind. Im besonderen weisen solche Rotoren (1) einen Grundkörper (3) auf, auf den die einzelnen Schneidsegmente (2) angeordnet sind.

FIG. 2

FIG. 12

EP 0 341 528 A1

Die Erfindung betrifft eine Vorrichtung zum Pflücken und/oder Häckseln und/oder Zerkleinern von Pflanzen aller Art, insbesondere Vorsatz für Erntemaschinen für Mais, Sonnenblumen und dergl., mit einem Rotor, der mit Messern zusammenwirkende Schlitze aufweist.

Derartige Vorrichtungen sind zB, durch die EP-A 0 131 853, durch Prospekte und das deutsche Gebrauchsmuster G 86 00 113.2 der Firma Carl Geringhoff GmbH & Co.KG., Ahlen, DE bekanntgeworden. Gemäß diesem Gebrauchsmuster sollen teure Gußmodelle für den Rotor dadurch vermieden werden, daß der Rotor als Schweißkonstruktion ausgeführt ist. Es können dann einzelne, durch Überbeanspruchung abgebrochene Rotorteile wieder angeschweißt werden. Rotorteile werden nun beim normalen Gebrauch solcher Vorrichtungen auch abgenutzt, sodaß letzten Endes der gesamte Pflückvorsatz durch einen neuen solchen Vorsatz ersetzt werden muß, was technisch und wirtschaftlich äußerst nachteilig ist.

Die Erfindung stellt sich die Aufgabe, diese Nachteile dadurch zu vermeiden, daß der Rotor einzelne Schneidsegmente umfaßt, die auswechselbar sind. Nach einem weiteren Kennzeichen der Erfindung weist der Rotor einen Grundkörper auf, auf dem die einzelnen Schneidsegmente angeordnet sind. Der Grundkörper des Rotors kann dabei rohrförmig ausgebildet sein, wobei auf diesem Rotor neben den Schneidsegmenten auch ein Einzugskopf vorgesehen ist. Nach einer anderen Ausführungsform der Erfindung sind die Schneidsegmente ohne Grundkörper zusammengespannt, vorzugsweise zusammengeschraubt.

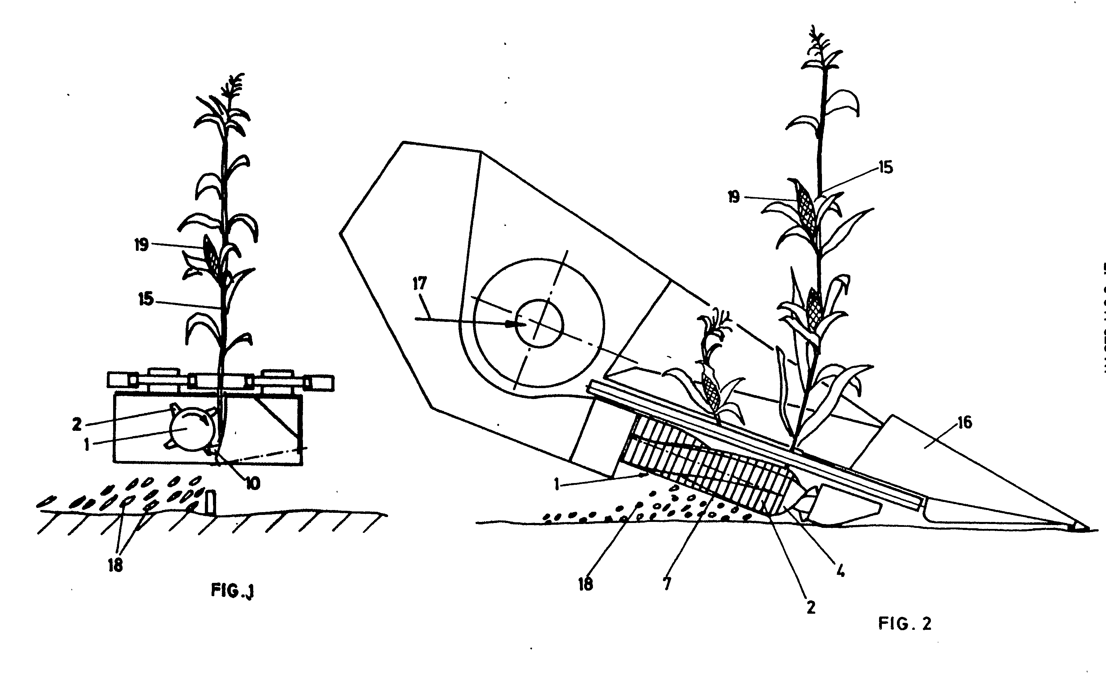

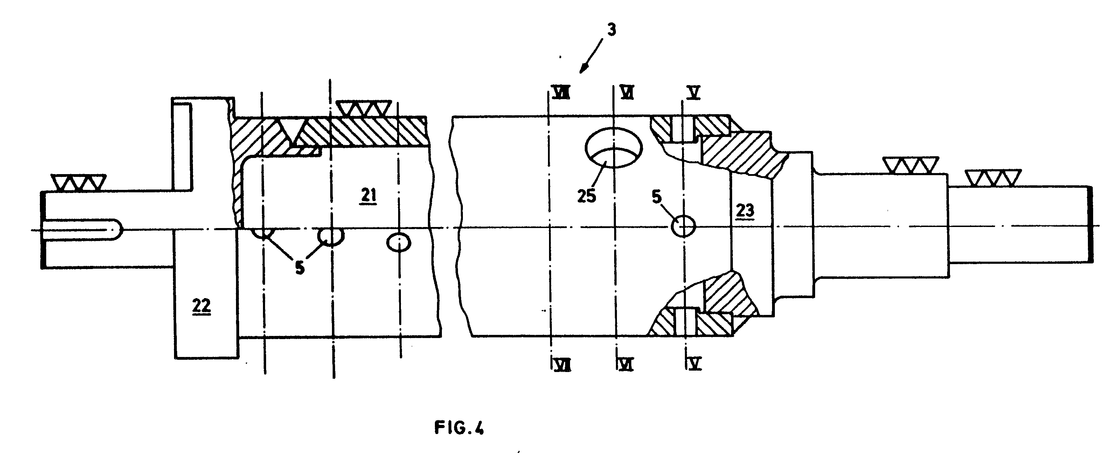

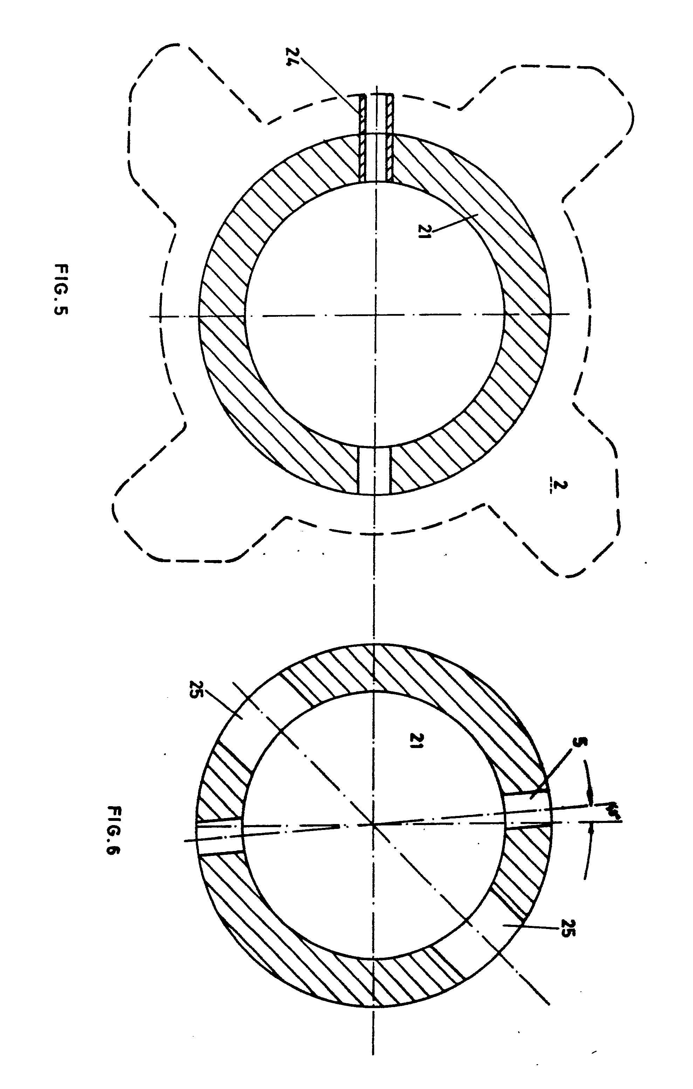

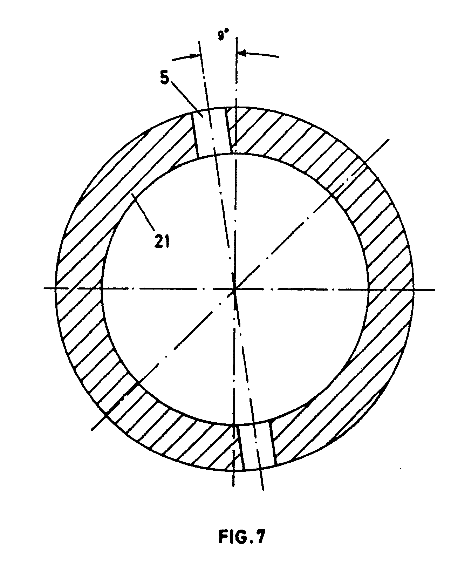

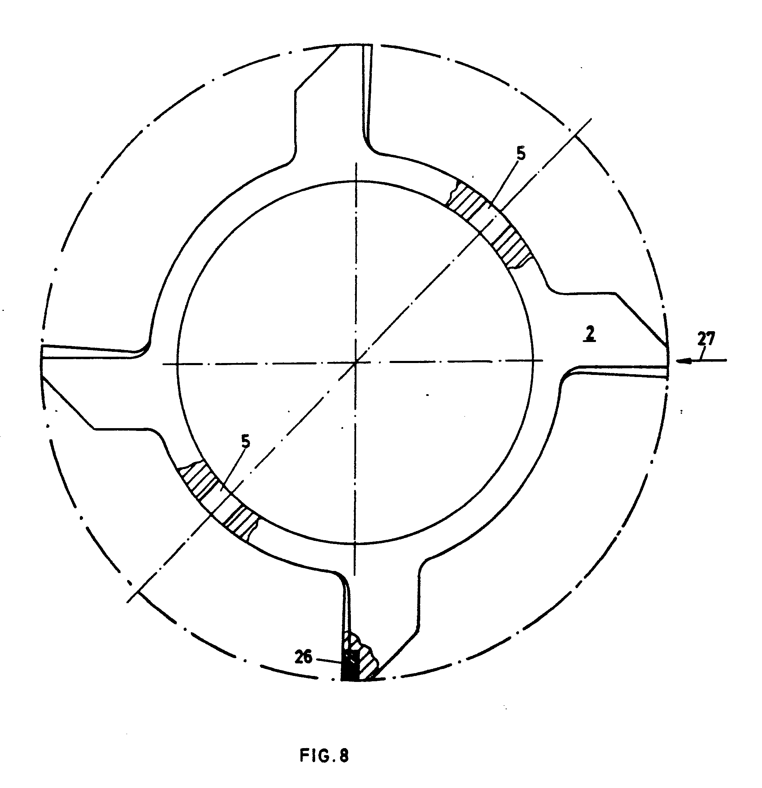

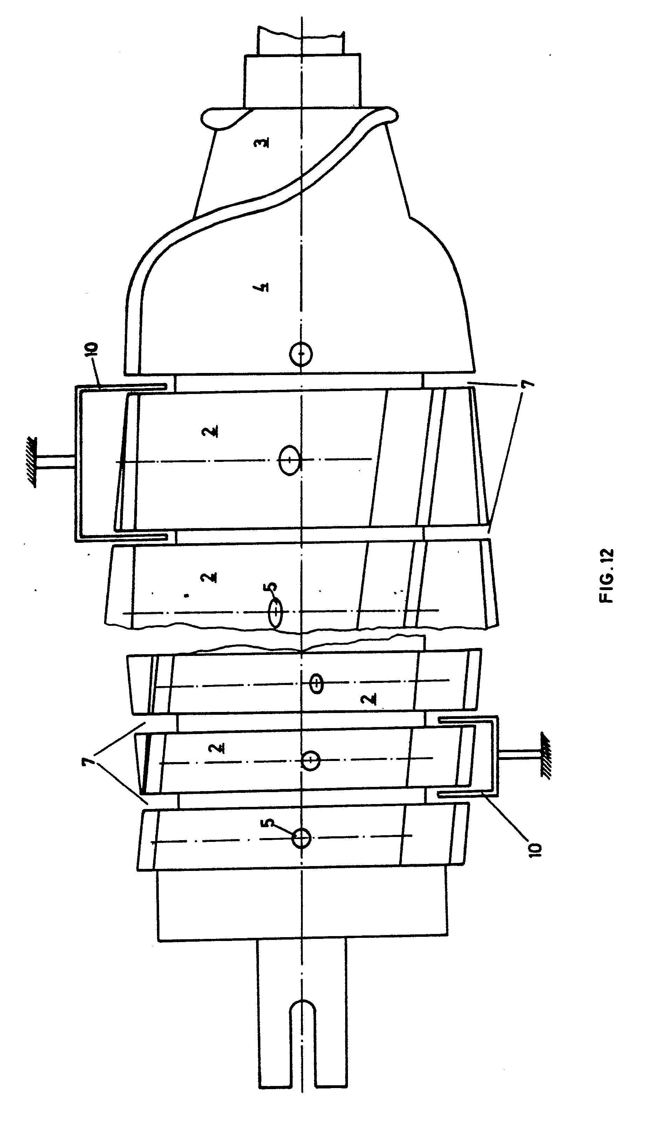

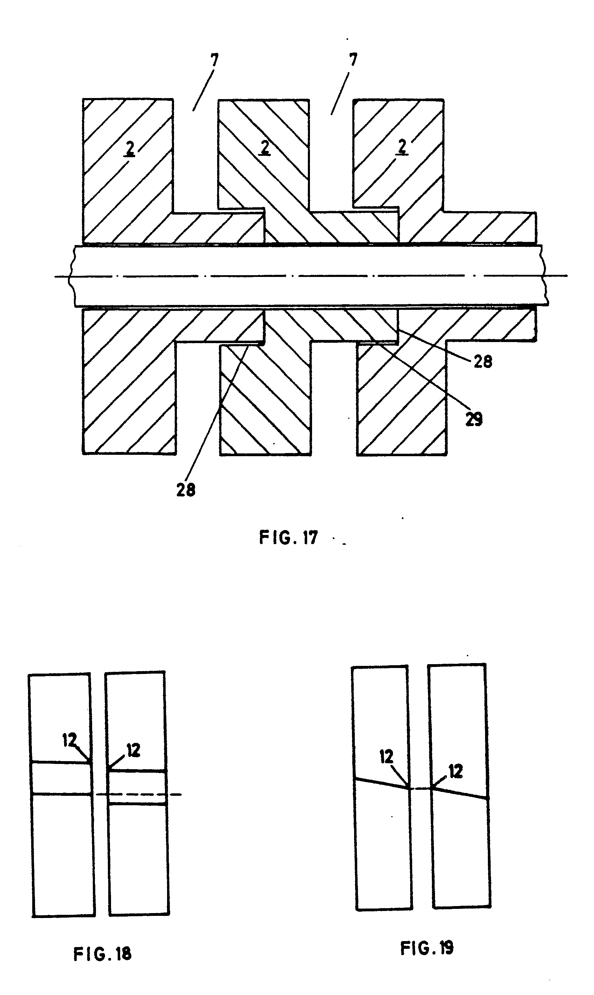

In der Zeichnung ist der Gegenstand der Erfindung in einigen Ausführungsformen beispielsweise dargestellt. Die Fig. 1,2 und 3 veranschaulichen bekannte derartige Vorrichtungen; Fig.4 ist ein teilweiser Schnitt durch den erfindungsgemäßen Grundkörper; Fig.5 ist ein Schnitt nach der Linie V-V der Fig.4; Fig.6 ist ein Schnitt nach der Linie VI-VI der Fig.4 und Fig.7 ein Schnitt nach der Linie VII-VII der Fig.4. Aus den Fig. 8 bis 11 sind verschiedene Schneidsegmente in einander zugeordneten Rissen zu ersehen. Fig.12 zeigt (abgebrochen) einen erfindungsgemäßen Rotor, wobei der Grundkörper nach Fig.4 mit Schneidsegmten gemäß den Fig. 8 bis 11 ausgestattet ist. Aus den Fig. 13 bis 16 sind erfindungsgemäße Einzelheiten zu ersehen. Endlich stellt Fig.17 eine andere Ausführungsform des Gegenstandes der Erfindung dar. Die oben genannten Figuren sind teilweise schematisch gehalten. Dies gilt auch für die Fig. 18 und 19.

Derartige Vorrichtungen dienen im allgemeinen zum Ernten der in Reihen stehenden Pflanzen 15, siehe Fig.1 und 2. Mit 16 ist die Einlaufspitze des Pflückvorsatzes bezeichnet, der senkrecht zur Zeichenebene Fig.1 mehrere solche Einlaufspitzen aufweist. Wird der Pflückvorsatz durch die Erntemaschine in Richtung des Pfeiles 17 fortbewegt, so werden die Stengel der Pflanzen 15 vom Rotor 1 erfaßt, der im allgemeinen schraubenlinig angeordnete Schneidsegmente 2 trägt. Zwischen den Schneidsegmenten 2 sind Schlitze 7 angeordnet, die in an sich bekannter Weise mit feststehenden Messern 10 zusammenwirken, wobei jeweils in jedem Schlitz 7 ein Messer 10 zu liegen kommt. Werden also Stengel und Blätter der Pflanzen 15 von den Schneidsegmenten 2, wie in Fig.1 veranschaulicht, erfaßt und an den Messern 10 vorbeigeführt, so entsteht das Häckselgut 18, das abtransportiert werden kann. Kolben oder sonstige Früchte 19 werden durch bekannte Geräte abgestreift und weiter verarbeitet.

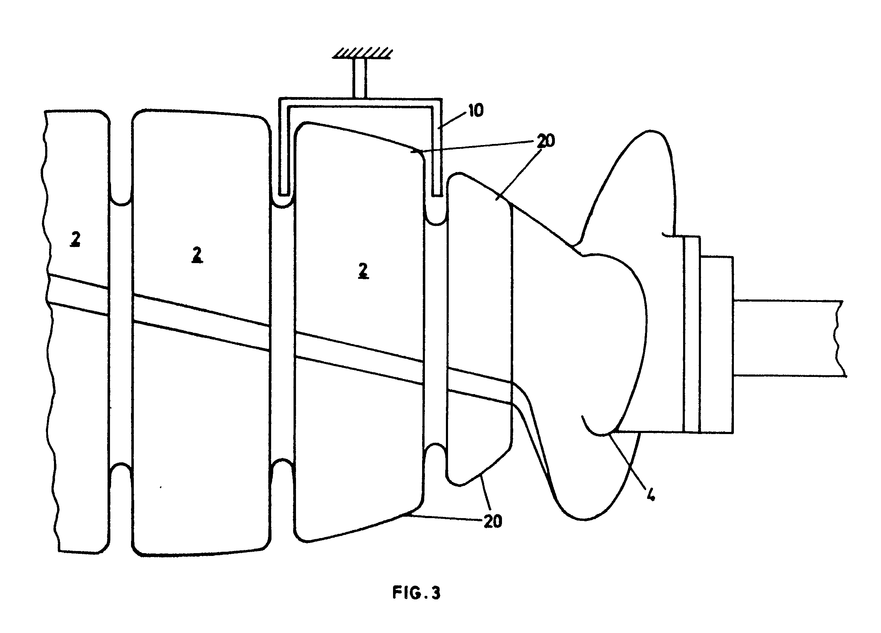

An den Einzugskopf 4 solcher bekannter Rotoren, Fig.3 schließen breite Schneidsegmente 2 an, dann folgen schmälere solche Segmente 2. Der wesentliche Nachteil dieser bekannten Pflückvorsätze liegt, wie schon gesagt, darin, daß die vorderen Schneidsegmente 2 anschließend an den Einzugskopf 4 einer großen Abnutzung unterliegen. In Fig.3 ist eine diesbezügliche Abnutzung mit dem Bezugszeichen 20 versehen. Dies führt zu einer starken Leistungsverminderung. Schreitet die Abnutzung im Zuge des Betriebes weiterhin fort, so kann es letzten Endes zu dem genannten Funktionsausfall kommen. Selbstverständlich wird so auch die Qualität des Erntegutes beeinträchtigt. Es erfolgt nach und nach keine Zerkleinerung durch Schneiden der Stengel und Blätter, sondern es kommt praktisch nur mehr zu einem Zerquetschen, wodurch der Antriebsleistungsbedarf erhöht wird. Es werden so auch die Messer 10 überbelastet, was zum Bruch dieser Messer führen kann. Dabei besteht die Gefahr, daß abgebrochene Messerteile in das Häckselgut und, beim Verfüttern des Häckselgutes zB. in den Kuhmagen gelangen. Dies muß selbstverständlich vermieden werden. Letzten Endes kann man dann eben nur den gesamten einstückigen Rotor durch einen neuen solchen Rotor ersetzen, wobei aber beim unbrauchbar gewordenen Rotor bloß der Einzugskopf 4 bzw. die unmittelbar daran anschließenden Schneidsegmente 2 unbrauchbar sind; alle anderen Schneidsegmente 2 sind an sich noch funktionsfähig. Es liegen hier also tatsächlich neben den genannten technischen Nachteilen auch große wirtschaftliche Nachteile vor, was erfindungsgemäß vermieden wird.

Nach einem ersten Ausführungsbeispiel weist der Rotor 1 einen Grundkörper 3 auf, der in den Fig. 4 bis 7 veranschaulicht ist. Dieser Grundkörper 3 besteht im wesentlichen aus einem Rohr 21, an dessen beiden Enden Flanschteile 22 und 23 mit Wellenstummeln angeordnet sind. Der Antrieb des Rotors 1 erfolgt über den Flanschteil 22. Aus den Fig. 4,6 und 7 ersieht man, daß die Bohrungen 5 zum Befestigen von Schneidsegmenten 2 versetzt vorgesehen sind. Die Versetzung beträgt hier beispielsweise 4,5° von einer Bohrung 5 zur nächsten benachbarten Bohrung 5, um die Schneidsegmente 2 auf dem Rotor schraubenförmig anzuordnen. In Fig.5 ist ein Schneidsegment 2 gestrichelt eingezeichnet, das mittels einer geschlitzten und nach außen federnden Spannhülse 24 am Rohr 21 befestigt ist. Die Öffnung 25 dient zu Montagezwecken.

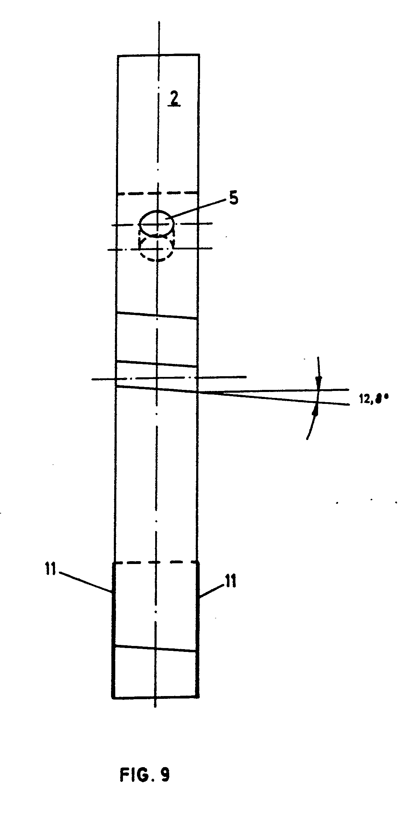

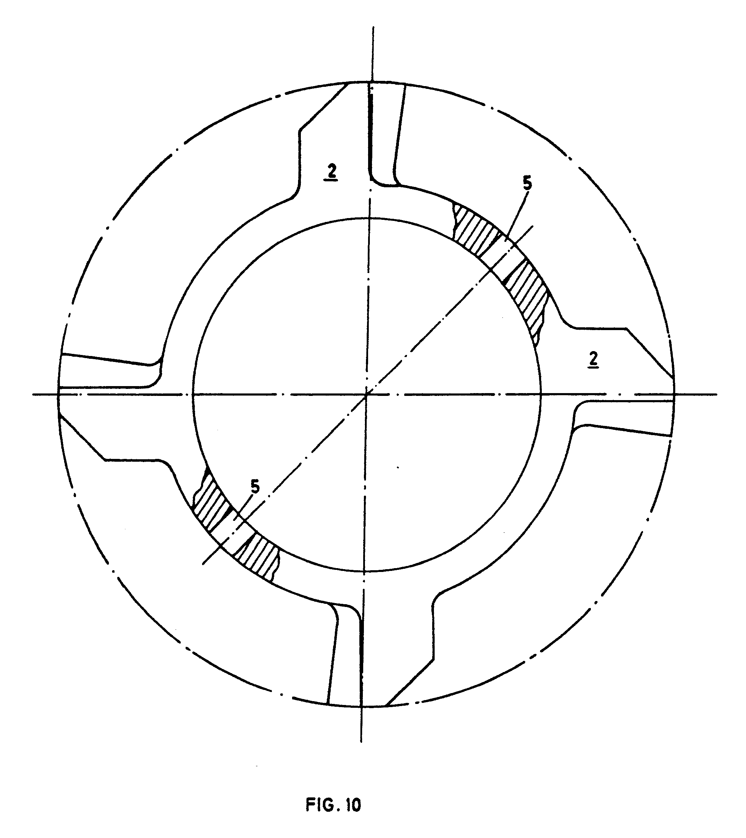

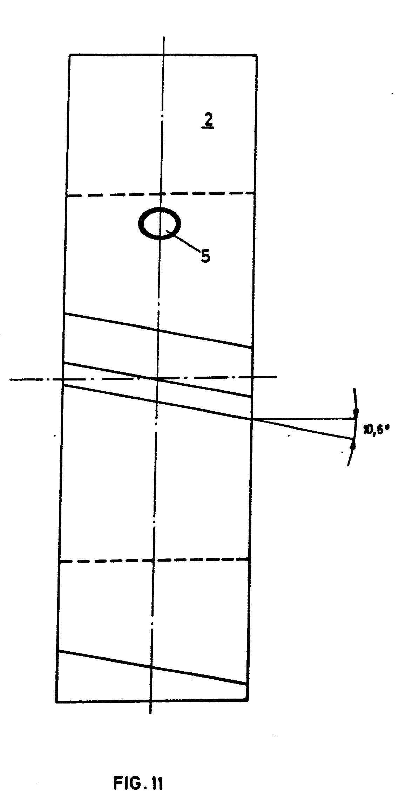

Die Ausbildung der verschiedenen Schneidsegmente 2 ist aus den Fig. 8 bis 11 ersichtlich. Dabei veranschaulichen die Fig.8 und 9 ein schmales solches Schneidsegment 2, 5 sind die Befestigungslöcher. Mit 11 ist eine Verschleißschicht zB. aus Wolframkarbid bezeichnet. Es kann auch eine Verstärkung der Schneide erfolgen, wie in Fig.8 bei 26 angedeutet. Die Steigung der schraubenförmig angeordneten Schneiden der Schneidsegmente 2 beträgt hier beispielsweise 12,8°. Nach diesen Erklärungen ist das breitere Schneidsegment 2 nach den Fig. 10 und 11 von selbst verständlich. Die Steigung kann hier zB. 10,6° betragen. Selbstverständlich können auch die breiteren Schneidsegmente 2 mit entsprechenden Verschleißschichten versehen sein.

Wie man aus Fig.12 ersieht, ist auf dem bewußten Grundkörper 3 neben den breiteren und schmäleren Schneidsegmenten 2 auch der Einzugskopf 4 vorgesehen. Bei 10 ist schematisch ein Messer angedeutet.

Zur Bildung von Schlitzen 7 am Rotor 1 weist jedes Schneidsegment 2 an seiner Seitenfläche eine Stufe 8 auf, siehe Fig.13. In einer anderen Ausführungsform sind zwischen den Schneidsegmenten 2 mit durchwegs planen seitlichen Begrenzungsflächen Distanzringe 9 vorgesehen. In beiden Fällen kommen die mit den Schlitzen 7 zusammenwirkenden Messer 10 mit dem Schneidsegment bzw. mit dem Grundkörper des Rotors 1 in vorteilhafter Weise nicht in Berührung.

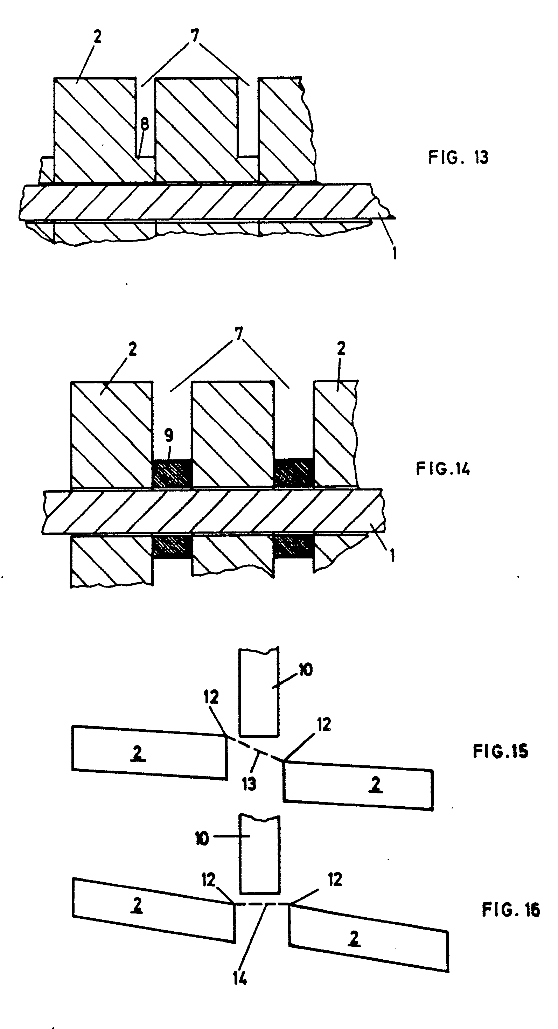

In den Fig. 15 und 16 ist für zwei verschiedene Ausführungsformen eine Ansicht in Richtung des Pfeiles 27 der Fig.8 wiedergegeben. Bei der Anordnung gemäß Fig.15 sind die Schneidkanten 12 der benachbarten Schneidsegmente 2 stufenförmig vorgesehen, was durch die Verdrehung der Schneidsegmente ohne Steigungswinkel der Schneidkanten gegeben ist. Ist an den Schneidsegmenten ein entsprechender Steigungswinkel an den Schneidkanten vorgesehen, so ist zwischen den benachbarten Schneidkanten 12 in vorteilhafter Weise keine Stufe vorhanden. Bei der anderen Ausführungsform nach Fig. 16 sind diese Schneidkanten 12 in anderer Weise abgestuft angeordnet, wie die gestrichelte Linie 14 erkennen läßt. Im Zusammenwirken mit dem Messer 10 ergibt sich bei der Ausführung gemäß Fig.16 eine geringere Abnutzung der Schneidkanten 12.

Endlich liegt es auch im Rahmen der Erfindung, die Schneidsegmente 2 ohne Grundkörper zusammenzuspannen, wie dies in Fig.17 veranschaulicht ist.

Ein Zusammenspannen verschiedener Schneidsegmente 2 kann zB. durch eine zentral liegende Schraube oder eine andere passende Spannvorrichtung erfolgen. Um diese Schneidsegmente 2 gewünschtenfalls schraubenförmig anordnen zu können, sind an den Stirnseiten 28 und/oder Mantelflächen 29 Fixierungen oder Verzahnungen vorgesehen.

Es liegt auf der Hand, daß solche einzelne oder auf einem Grundkörper angeordnete Schneidsegmente 2 gegebenenfalls leicht ausgewechselt werden können. Es ist dann durchaus nicht notwendig, den gesamten Rotor, der nur in einem kleinen Bereich unbrauchbar geworden ist, durch einen neuen Rotor zu ersetzen. Es kann erforderlichenfalls auch ein Auswechseln der Schneidsegmente von vorne nach hinten erfolgen. Nicht nur abgenützte, sondern auch beschädigte Schneidsegmente können jederzeit ausgetauscht werden. Es wird wiederholt, daß neben allen technischen Vorteilen die Erfindung auch nachtechnische Vorteile, nämlich wirtschaftliche Vorteile mit sich bringt.

Die Erfindung ist auf die dargestellten Ausführungsbeispiele nicht beschränkt. Die Anordnung der Schneidsegmente am Rotor kann auch geradlinig, zickzackförmig oder stufenförmig erfolgen. Der Grundkörper kann auch als volle Welle (ohne inneren Hohlraum) rund oder eckig ausgebildet sein. Die Verdrehung der Schneidsegmente gegeneinander hängt davon ab, wieviele Schneiden das Segment aufweist und wieviele Schneidsegmente auf dem Grundköper anzuordnen sind. Segmente können mehr als vier, aber auch nur drei, zwei oder eine Schneide haben. Bei weniger Schneiden und weniger Schneidsegmenten am Grundkörper muß der Verdrehungswinkel vergrößert werden. Es beträgt zB. bei nur je einer Schneide je Segment und vier Segmenten am Grundkörper, der Verdrehungswinkel 90°. Bei etwa sechs Schneiden am Segment und zwanzig Segmenten am Grund körper beträgt der Verdrehungswinkel 3°.

Die seitliche Verschleißschicht kann nur an einzelnen, auswechselbaren Schneidsegmenten vor der Montage angeordnet werden. Dabei kann die Verschleißschicht 26 eine Hartmetallplatte sein, die, wie dargestellt, mit dem Segment verbunden ist. Diese Verschleißschicht kann auch mittels eines Schweißbrenners, eines Plasmastrahles oder Laserstrahles als Hartauftragung vorgesehen sein. Nach der Hartauftragung ist durch eine Nachbehandlung, insbesondere durch Schleifen, eine exakte scharfe Schneidkante gebildet. Das Grundmaterial der Schneidsegmente kann auch Leichtmetall oder Kunststoff sein, das mit einer verschleißfesten Schneidkante versehen wird, zB. durch Anbringen einer Hartmetallplatte.

Bei den in den Fig. 8 bis 11 dargestellten Schneidsegmenten können die dort eingetragenen Winkel zwischen 12,8° bzw. 10,3° gegebenenfalls auch zwischen 0° und 30° liegen.

Endlich sei noch gesagt, daß statt einer Verschleißschicht auch ein stellenweises Vergüten der Schneidsegmente erfolgen kann.

Die Figuren 18 und 19 veranschaulichen ebenfalls in Richtung des Pfeiles 27 der Fig.8 ähnlich wie Fig.15 und 16 eine derartige Ansicht in anderer Darstellungsweise. Die Schneidkanten 12 können einander gegenüber liegen, wie in Fig.18 oder in Fig.19 dargestellt.

## Ansprüche

1. Vorrichtung zum Pflücken und/oder Häckseln und/oder Zerkleinern von Pflanzen aller Art, insbesondere Vorsatz für Erntemaschinen für Mais, Sonnenblumen und dergl., mit einem Rotor, der mit Messern zusammenwirkende Schlitze aufweist, dadurch gekennzeichnet, daß der Rotor (1) einzelne Schneidsegmente (2) umfaßt, die auswechselbar sind.

2. Vorrichtung nach Anspruch 1, dadurch gekennzeichnet, daß der Rotor (1) einen Grundkörper (3) aufweist, auf dem die einzelnen Schneidsegmente (2) angeordnet sind.

3. Vorrichtung nach den Ansprüchen 1 und 2, dadurch gekennzeichnet, daß der Grundkörper des Rotors (1) rohrförmig ausgebildet ist, auf dem neben Schneidsegmenten (2) auch ein Einzugskopf (4) vorgesehen ist.

4. Vorrichtung nach einem der vorhergehenden Ansprüche, dadurch gekennzeichnet, daß die Schneidsegmente (2) und gegebenenfalls der Einzugskopf (4) mittels Befestigungselementen, wie Bohrungen (5) und entsprechende Stifte, Schrauben. Spannhülsen oder dergl. am Grundkörper (3) des Rotors (1) angeordnet sind.

5. Vorrichtung nach einem der vorhergehenden Ansprüche, dadurch gekennzeichnet, daß zur schraubenförmigen Anordnung der Schneidsegmente (2) und des Einzugskopfes (4) am Grundkörper des Rotors (1) Befestigungselemente jeweils gegeneinander verdreht vorgesehen sind.

6. Vorrichtung nach Anspruch 5, dadurch gekennzeichnet, daß die Verdrehung in den Grenzen von 3° bis 7°, insbesondere 4° bis 6° liegt.

7. Vorrichtung nach einem der vorhergehenden Ansprüche, dadurch gekennzeichnet, daß im wesentlichen über die gesamte Länge des Rotors (1), also im wesentlichen über den schraubenförmigen Arbeitsteil Schneidsegmente (2) gleicher Ausbildung und gleicher Dicke Verwendung finden, wobei nur in Nähe des Einzugskopfes (4) Schneidsegmente (2) größerer Dicke vorgesehen sind, oder mehrere dünnere Schneidsegmente, die gegeneinander nicht verdreht sind, angeordnet sind.

8. Vorrichtung nach einem der vorhergehenden Ansprüche, dadurch gekennzeichnet, daß zur Bildung von Schlitzen (7) am Rotor (1) jedes Schneidsegment (2) an einer oder beiden Seitenflächen eine Stufe aufweist oder daß zwischen Schneidsegmenten (2) mit durchwegs planen seitlichen Begrenzungsflächen Distanzringe (9) vorgesehen sind, sodaß die mit diesen Schlitzen (7) zusammenwirkenden Messer (10) nicht mit dem Schneidsegment bzw. nicht mit dem Grundkörper (3) in Berührung kommen (Fig. 13,14).

9. Vorrichtung nach einem der vorhergehenden Ansprüche, dadurch gekennzeichnet, daß die Schneidsegmente (2) seitlich mit einer Verschleißschicht, zB. Wolframkarbid, beschichtet sind.

10. Vorrichtung nach Anspruch 9, dadurch gekennzeichnet, daß die Verschleißschicht mittels Schweißbrenner, Plasmastrahl oder Laserstrahl aufgebracht ist.

11. Vorrichtung nach einem der vorhergehenden Ansprüche, dadurch gekennzeichnet, daß die Schneidkanten (12) der Schneidsegmente (2) in der Ebene benachbarter Schneidsegmente (2) liegen oder abgestuft angeordnet sind. (Fig. 15, 16).

12. Vorrichtung nach einem der vorhergehenden Ansprüche, dadurch gekennzeichnet, daß die Schneidsegmente (2) ohne Grundkörper zusammengespannt, vorzugsweise zusammengeschraubt sind. (Fig. 17).

FIG. 2

FIG. J

FIG. 3

FIG.4

EP 0 341 528 A1

FIG.5

FIG.6

FIG.7

FIG. 8

FIG. 9

FIG. 10

FIG. 11

FIG.12

FIG. 13

FIG.14

FIG.15

FIG. 16

FIG. 17

FIG. 18

FIG. 19

| | **EINSCHLÄGIGE DOKUMENTE** | | EP 89107848.7 |
|---|---|---|---|
| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
| D,Y | DE - U1 - 8 600 113.2 (CARL GERINGHOFF GMBH) * Fig. 2; Seite 6, Zeilen 26ff * | 1 | A 01 D 45/02 |
| D,A | * Seite 6, Zeilen 14-32; Fig. 2 * | 3,7 | |
| Y | DE - A1 - 3 433 444 (KALVERKAMP, KLEMENS) * Fig. 1; Seite 9, Absatz 1 * | 1 | |
| A | * Fig. 1; Seite 9, Absatz 1 * | 2,4 | |

RECHERCHIERTE
SACHGEBIETE (Int. Cl.4)

A 01 D 45/00

Der vorliegende Recherchenbericht wurde für alle Patentansprüche erstellt.

| Recherchenort | Abschlußdatum der Recherche | Prüfer |
|---|---|---|
| WIEN | 13-07-1989 | SCHNEEMANN |